# FASCICULE DE BREVET EUROPEEN

(11) **EP 2 421 418 B1**
(45) Date de publication et mention de la délivrance du brevet: **17.04.2013**
(21) Numéro de dépôt: 10718112.5
(22) Date de dépôt: 20.04.2010
(51) Int. Cl.: A47J 31/54

(54) **CHAUDIÈRE POUR MACHINE DE PRÉPARATION DE BOISSONS**
HEISSWASSERBEREITER FÜR GETRÄNKEMASCHINE
BOILER FOR A MACHINE FOR PREPARING BEVERAGES

(30) Priorité: 21.04.2009 FR 0952614
(43) Date de publication de la demande: 29.02.2012
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2010/055149
(87) Numéro de publication internationale: WO 2010/121998

(56) Documents cités:
- WO-A-2008/120991
- WO-A-2009/043851
- WO-A-2009/043865
- DE-B3- 10 245 824
- FR-A- 2 920 654
- GB-A- 2 452 981

## Description

La présente invention concerne une chaudière pour machine de préparation de boissons chaudes capable de chauffer un fluide porté à une pression relativement élevée. Elle trouvera notamment son application pour les chaudières de machines à café.

De manière connue des chaudières pour machine de préparation de boissons chaudes comportent un bloc de métal définissant une chambre de chauffage et à l'intérieur duquel est noyé un élément résistif. Ces chaudières ont pour inconvénient de présenter une grande inertie thermique et nécessitent un temps relativement long pour chauffer le liquide. Par ailleurs, l'obtention de ces chaudières induit un coût de matière important.

Afin d'obtenir une boisson chaude en un temps réduit, il a été proposé des chaudières capables d'élever rapidement la température d'un liquide servant à la préparation d'une boisson. Ces chaudières comportent habituellement un élément chauffant de type résistance sérigraphiée associée à un diffuseur.

Ces chaudières ne sont cependant pas utilisées pour la préparation de boissons nécessitant une mise sous pression substantielle du liquide. En effet, elles ne résistent pas à des pressions relativement importantes supérieures à environ 8 bars tout en conservant un encombrement et un coût limités. Or, la préparation de certaines boissons telles que le café expresso requiert de porter le liquide à une pression d'environ 16 bars en vue de l'extraction du café.

Ainsi, il existe un besoin consistant à proposer une chaudière pour machine de préparation de boissons chaudes qui permet de chauffer rapidement un liquide porté à une pression élevée.

La présente invention vise à satisfaire ce besoin.

A cet effet, l'invention prévoit une chaudière pour machine de préparation de boissons comprenant au moins un diffuseur présentant une première paroi destinée à être disposée au contact du fluide à chauffer, une deuxième paroi opposée à la première paroi et munie d'au moins un élément chauffant, au moins un corps définissant avec la première paroi du diffuseur au moins une chambre de chauffage, dans laquelle l'élément chauffant est une résistance sérigraphiée ou photogravée ou tout autre film résistif. La chaudière comporte des moyens d'appui agencés pour prendre appui sur une partie au moins du pourtour de la deuxième paroi. La chaudière présente une chambre de déformation. La chaudière est agencée de sorte qu'en fonctionnement, sous l'effet de la pression régnant dans la chambre de chauffage, typiquement comprise entre 8 et 25 bars, le diffuseur se déforme élastiquement dans la chambre de déformation pour absorber en partie au moins l'effort de pression.

Ainsi, l'invention autorise une déformation élastique et une pénétration du diffuseur au sein de la chambre de déformation sous l'effet de la pression. L'effort de pression n'est donc pas transmis, du moins en totalité, à un organe de la chaudière, évitant de ce fait de créer une forte zone de contrainte. Le diffuseur absorbe ainsi une part substantielle de l'effort de pression générée par le fluide sous pression.

En outre le diffuseur n'a pas besoin de présenter une grande rigidité ou une importante épaisseur. Son inertie thermique est par conséquent limitée.

L'invention propose ainsi une chaudière résistant à une pression élevée, typiquement d'au moins 8 bars, tout en autorisant un temps de chauffe réduit.

De manière facultative mais néanmoins avantageuse, l'invention peut présenter l'une quelconque des caractéristiques suivantes:
- la chaudière est agencée pour supporter une pression du fluide dans la chaudière aisément supérieure à 10 bars et de préférence allant jusqu'à 25 bars dans la chambre de chauffage.
- de manière avantageuse, la chaudière est conformée de sorte qu'en fonctionnement la pression dans la chambre de chauffage est comprise entre 8 et 25 bars et de préférence entre 8 et 20 bars.
- le diffuseur et la chambre de déformation sont conformés de sorte que sous l'effort de pression le diffuseur se déforme sans interférer avec une partie de la chaudière dont la rigidité est supérieure à celle du diffuseur. A cet effet on peut prévoir que le diffuseur et la chambre de déformation sont conformés de sorte que le diffuseur se déforme sans interférer avec un organe de la chaudière. On peut également prévoir que le diffuseur entre au contact d'un fluide ou d'un matériau compressible, tels un gaz ou un élastomère.
- selon une alternative on peut prévoir que le diffuseur se déforme librement dans une première phase de sorte à encaisser une partie de l'effort de pression, puis que dans une deuxième phase il entre au contact d'une partie de la chaudière à laquelle il transmet une partie de l'effort de pression résiduelle.
- la chaudière comprend au moins deux diffuseurs dont les deuxième parois sont tournées mutuellement en regard.
- les diffuseurs enserrent les moyens d'appui.
- la chaudière présente une symétrie par rapport à un plan médian situé entre les deux diffuseurs. La partie de l'effort de pression qui est transmise aux moyens d'appui s'équilibre au niveau des moyens d'appui.
- le diffuseur présente une surface comprise entre 2000 et 9000 mm² et plus avantageusement entre 2500 et 8000 mm².
- le diffuseur présente une épaisseur comprise entre 0.3 et 4 mm et plus avantageusement entre 0.5 et 2.5 mm. De manière avantageuse pour diminuer l'inertie thermique et augmenter la vitesse de chauffage cette épaisseur est comprise entre 0.5 et 1.5 mm.
- la chambre de déformation, dans la zone de déformation maximale du diffuseur, présente une profondeur comprise entre 0.3 et 2 mm et plus avantageusement entre 0.3 et 1 mm.
- la surface du diffuseur qui est libre de se déformer sous l'effet de la pression représente plus de 60% et avantageusement plus de 70% et encore plus avantageusement plus de 80% de la surface totale du diffuseur. La surface restante est maintenue par les moyens d'appui et définit le pourtour du diffuseur. De préférence, la chambre de déformation présente une surface comprise entre 60 et 95% de la surface du diffuseur.
- la déformation du diffuseur est statique.
- le contact entre les moyens d'appui et le diffuseur, ainsi que l'élasticité du diffuseur sont configurés de sorte que le diffuseur se déforme sans se soulever au niveau des moyens d'appui.
- le dispositif comporte un support faisant office de bâti et recevant les moyens d'appui.
- les moyens d'appui définissent le support. Alternativement, le support est distinct des moyens d'appui.
- le support présente une cavité définissant la chambre de déformation.
- la cavité peut être ajourée. Alternativement elle est fermée par rapport à l'extérieur de la chaudière. Elle peut être rendue étanche.
- le support et les moyens d'appui forment une pièce monobloc.
- la chaudière comprend au moins deux diffuseurs tournés mutuellement en regard et enserrant les moyens d'appui.
- selon un mode de réalisation la chambre de chauffage est située en périphérie des moyens de chauffage et les moyens de chauffage sont situés en périphérie des moyens d'appui. Selon un autre mode de réalisation les moyens de chauffage sont situés en périphérie du volume de chauffage et les moyens d'appui sont situés en périphérie des moyens de chauffage de sorte à envelopper ces derniers.
- le diffuseur est sensiblement plat. L'invention est particulièrement avantageuse avec ce type de diffuseur puisque leur tenue en pression est généralement très limitée. Selon un mode de réalisation les moyens de chauffage présentent une forme sensiblement cylindrique. On peut alors prévoir que la section des diffuseurs selon l'axe du cylindre est sensiblement circulaire ou que la section des diffuseurs selon l'axe du cylindre présente une forme sensiblement polygonale et de préférence carrée.
- le support présente au moins une première zone dans laquelle sont situés les moyens d'appui et qui est destinée à recevoir le diffuseur et au moins une deuxième zone située en périphérie de la première zone et par laquelle le corps est destiné à être solidarisé avec le support.
- le support présente une symétrie par rapport à un plan médian
- la chaudière présente une symétrie par rapport à un plan médian.
- elle comporte deux diffuseurs et les moyens d'appui sont intercalés entre les deuxièmes parois de chacun des diffuseurs.
- la chaudière est agencée pour que le liquide sous pression soit disposé de part et d'autre des moyens d'appui de manière à ce que les efforts générés par la pression du liquide soient transmis aux moyens d'appui et s'équilibrent au niveau des moyens d'appui. Ainsi, les efforts générés par la pression sont reportés sur le corps.

L'invention a également pour objet une machine de préparation de boissons telle qu'une machine à cafés comprenant par une chaudière selon l'une quelconque des caractéristiques précédentes. Cette machine comprend une pompe destinée à élever la pression du liquide avant son introduction dans la chaudière.

D'autres caractéristiques, buts et avantages de la présente invention apparaîtront à la lecture de la description détaillée qui va suivre, et en regard des dessins annexés donnés à titre d'exemples non limitatifs et sur lesquels:
- la figure 1 est une vue en coupe d'une chaudière selon un exemple de réalisation de l'invention dans laquelle le diffuseur n'est pas soumis à un important effort de pression.
- la figure 2 est une vue en coupe de chaudière illustrée en figure 1 dans laquelle le diffuseur est soumis à un important effort de pression.

La chaudière comporte un corps 5 et des moyens de chauffage formant avec le corps 5 un volume de chauffage à l'intérieur duquel un liquide est destiné à s'écouler et à être chauffé. Plus particulièrement, les moyens de chauffage comportent au moins un diffuseur 1 présentant une première paroi 2 destinée à être disposée au contact du liquide à chauffer. Cette première paroi 2 est destinée à entrer en appui avec une face interne du corps 5 pour définir la chambre de chauffage.

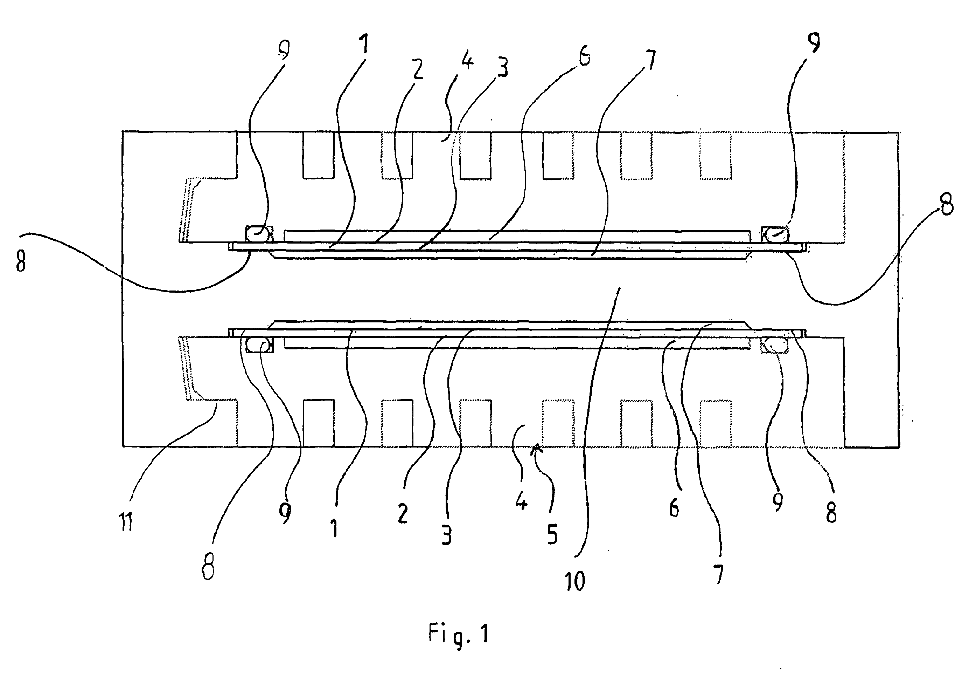

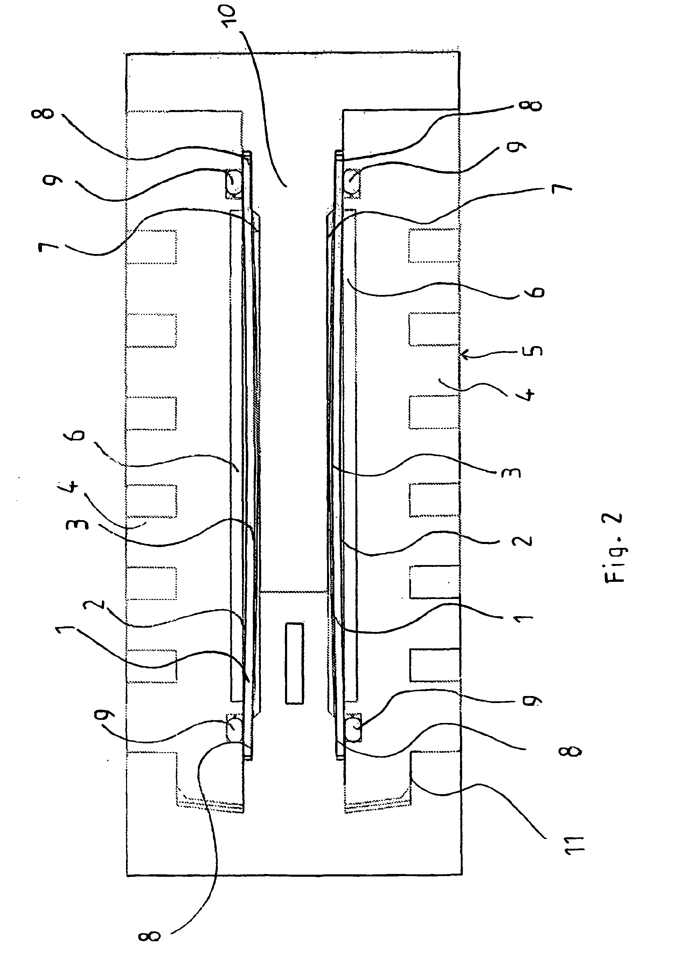

Dans l'exemple représenté, le volume de chauffage définit un canal de circulation 6 en forme de serpentin. Ce canal 6 vu en coupe présente par exemple deux parois transversales et deux parois latérales. Une première paroi 2 transversale est portée par la première paroi 2 du diffuseur 1 et une deuxième paroi 3 transversale est portée par la face interne du corps 5. Les parois latérales sont portées par le corps 5 et s'étendent en direction du diffuseur 1. Sur les figures 1 et 2, le canal est coupé dans le sens de sa longueur.

Dans une variante de réalisation non illustrée, on prévoit que les parois latérales sont portées par le diffuseur 1. Dans cette variante de réalisation, le diffuseur 1 comporte plus de matière que dans la variante précédente. Les parois latérales augmentent la surface de contact entre le diffuseur 1 et le liquide. Les échanges thermiques sont donc favorisés.

Les moyens de chauffage comportent au moins un élément chauffant disposé sur une deuxième paroi 3 du diffuseur 1, cette deuxième paroi 3 étant opposée à la première paroi 2. Avantageusement, cet élément chauffant est un film résistif présentant une haute densité de puissance. Il est par exemple obtenu par sérigraphie ou photogravure à partir d'une encre résistive. Il peut être de type film épais, habituellement désigné par l'expression "Thick Film" ou encore être de type circuit imprimé. Cet élément chauffant convient pour les chaudières de type FTH (Flow Through Heater) qui présentent pour particularité que leur élément chauffant transmet de la chaleur presque directement au fluide et au fur et à mesure que celui se déplace dans un canal de circulation. Pour des raisons de clarté, on ne fera référence dans la suite de la description qu'aux résistances sérigraphiées. Dans chacun des modes de réalisation décrits par la suite, la résistance sérigraphiée pourra être substituée par une résistance photogravée ou par tout autre film résistif à haute densité de puissance.

La résistance sérigraphiée comporte au moins une piste formant un motif sur la deuxième paroi 3. La résistance comprend une piste sérigraphiée ou une pluralité de pistes définissant le motif. Ce motif peut par exemple former un serpentin, une spirale, un ensemble de cercles concentriques ou juxtaposés ou encore toutes autres formes.

Lorsque la résistance sérigraphiée est alimentée en électricité, elle produit de la chaleur qui se transmet au diffuseur 1 puis au liquide occupant la chambre de chauffage. De manière préférée la chambre de chauffage forme un canal de circulation et la chaudière objet de la présente invention est de type « Flow Through Heater » dont la définition a été donnée ci-dessus.

La résistance sérigraphiée peut par exemple présenter une puissance thermique comprise entre 1300 watts et 2500 watts, et plus particulièrement de l'ordre de 1800 à 2200 watts. Le diffuseur 1 a pour fonction de servir de substrat pour recevoir la résistance sérigraphiée et pour assurer une bonne diffusivité thermique entre la résistance sérigraphiée et le liquide. Avantageusement la première paroi 2 est revêtue d'un revêtement alimentaire.

La chaudière comprend des moyens d'appui 8 agencés pour prendre appui sur la deuxième paroi 3 du diffuseur 1. Ces moyens d'appui 8 tendent à maintenir le diffuseur 1 au contact du corps 5.

De manière caractéristique, la chaudière comporte une chambre de déformation 7. Cette chambre est située par rapport à la chambre de chauffage en arrière de la deuxième paroi 3 du diffuseur 1.

La chaudière est agencée de sorte que sous l'effet de l'effort de pression généré par le fluide présent dans la chambre de chauffage, le diffuseur 1 se déforme élastiquement dans la chambre de déformation 7. La chaudière est configurée de manière à ce que cette déformation du diffuseur 1 absorbe l'ensemble ou tout au moins une part significative de l'effort de pression. Cette déformation est essentiellement statique. Elle survient avec la montée en pression dans la chaudière. Elle se fige ensuite. Lorsque la pression diminue, le diffuseur retrouve sa forme et sa position initiales.

La déformation du diffuseur 1 est illustrée en figure 2. Sur cette figure le diffuseur 1 forme une plaque qui fléchit en pénétrant dans la chambre de déformation 7.

En tirant profit de la déformation du diffuseur 1, la chaudière permet ainsi d'accepter les pressions élevées sans nécessiter de diffuseur 1 particulièrement rigide ou présentant une forte épaisseur. L'invention permet ainsi de limiter l'épaisseur et donc l'inertie du diffuseur 1. Elle permet par conséquent d'obtenir en un temps réduit de l'eau chaude sous pression. L'inertie thermique de la chaudière étant réduite le rendement de cette dernière est par ailleurs amélioré. Avantageusement, le diffuseur 1 présente une conductivité thermique supérieure ou égale à 10 W/m/K et plus particulièrement une conductivité thermique comprise entre 10 W/m/K et 400 W/m/K. Ce choix de diffuseur 1 permet de favoriser la transmission de chaleur entre la résistance et le liquide.

En outre, l'invention permet de se passer de dispositif complexe et volumineux de reprise des efforts appliqués au diffuseur 1 pour tenir à la pression. L'invention a ainsi pour avantage de limiter l'encombrement de la chaudière.

On adaptera la profondeur de la chaudière de sorte à autoriser une déformation du diffuseur 1 qui soit suffisamment importante pour absorber tout au moins une partie significative de l'effort de pression. On désigne généralement par profondeur de la chambre de déformation 7 la dimension de cette chambre selon une direction sensiblement normale au diffuseur 1.

La chambre de déformation 7 est également conformée de sorte que lorsque le diffuseur est déformé, l'élément chauffant n'interfère pas avec les parois de la chambre de déformation 7. En particulier dans le cas où l'élément chauffant est une résistance sérigraphiée dont les pistes sont disposées au regard de la chambre de déformation 7, on prévoit une profondeur de la chambre de déformation 7 de sorte à éviter tout contact électrique.

Par ailleurs, la chambre de déformation 7 limite la transmission de la chaleur par conduction entre le diffuseur 1 et d'autres organes de la chaudière. L'invention renforce par conséquent l'isolation thermique du diffuseur 1. Le rendement de la chaudière en est donc amélioré.

On prévoit un diffuseur 1 présentant une bonne élasticité, notamment en flexion et une bonne diffusivité thermique. A cet effet on peut prévoir un diffuseur 1 constitué essentiellement en métal : acier, acier inoxydable, aluminium, acier émaillé ou alliage à base de laiton.

Selon un mode de réalisation privilégié, la chambre de déformation 7 et le diffuseur 1 sont conformés de sorte que le diffuseur 1 se déforme librement dans la chambre de déformation 7 sans interférer avec une partie de la chaudière qui présente une rigidité supérieure à celle du diffuseur 1. Ce dernier absorbe alors sensiblement tout l'effort de pression.

On peut ainsi prévoir que le diffuseur 1 n'interfère avec aucune partie de la chaudière lorsqu'il pénètre et se déforme élastiquement dans la chambre de diffusion. A cet effet la chambre de diffusion peut être remplie d'air non confiné dans cette dernière. L'isolation thermique des parties chaudes de la chaudière est alors améliorée et le rendement global est augmenté.

On peut également prévoir que le diffuseur 1 interfère avec un élément compressible disposé dans la chambre de déformation 7. Cet élément peut être un gaz confiné dans la chambre rendue sensiblement étanche ou un matériau de type élastomère tel que du silicone ou du caoutchouc résistant à une température élevée et/ou muni d'un revêtement isolant sur sa face au regard des éléments chauffants etc. Cette dernière variante permet de répartir l'effort de pression de manière homogène sur le diffuseur 1. Elle n'empêche pas la déformation de ce dernier si bien que le diffuseur 1 absorbe une part largement majoritaire de l'effort de pression. L'élément compressible absorbe quant à lui la partie résiduelle de l'effort de pression qui n'est pas absorbée par le diffuseur 1. Cette variante présente un avantage en terme de sécurité puisque tout risque de déformation du diffuseur 1 au delà de son seuil d'élasticité est évité. En choisissant un élément compressible isolant thermiquement et électriquement, cette variante contribue à renforcer l'isolation de la chaudière. La sécurité et le rendement de cette dernière sont donc améliorés.

Selon un autre mode de réalisation, la chaudière est agencée de sorte que le diffuseur 1 se déforme élastiquement à l'intérieur de la chambre de déformation 7 encaissant ainsi une partie substantielle de l'effort de pression, jusqu'à entrer au contact d'un élément rigide dont la rigidité est supérieure à celle du diffuseur 1. Le diffuseur 1 transmet alors à cet élément rigide la partie résiduelle de l'effort de pression non absorbée par le diffuseur 1. Cette partie résiduelle est significativement inférieure à la partie absorbée par le diffuseur 1. On choisira de préférence pour cet élément rigide un matériau isolant thermiquement et électriquement.

Pour chacun de ces modes de réalisation, on déterminera la profondeur de la chambre de déformation 7 en fonction notamment de l'effort de pression généré par le fluide et de la rigidité du diffuseur 1.

La chaudière est agencée de sorte que lorsque l'effort de pression est supprimé, le diffuseur 1 retrouve par élasticité sa position de repos.

De manière préférée, les moyens d'appui 8 définissent un contact sur le pourtour de la deuxième paroi 3 du diffuseur 1. Les moyens d'appui 8 peuvent appliquer un contact continu ou discontinu sous forme par exemple d'une pluralité de contacts ponctuels sur le diffuseur 1.

Avantageusement, la surface du diffuseur 1 en contact avec les moyens d'appui 8 est inférieure à 40 % et avantageusement à 30 % et encore plus avantageusement à 20 % de la surface totale du diffuseur 1. Ainsi la surface du diffuseur 1 qui est libre de se déformer pour encaisser l'effort de pression est largement plus importante que la surface du diffuseur 1 maintenue au contact du corps 5 par les moyens d'appui 8.

Avantageusement, la chaudière comporte un joint 9 périphérique intercalé entre le corps 5 et le diffuseur 1. Ce joint 9 entoure la chambre de chauffage de sorte à assurer l'étanchéité de cette dernière. A cet effet, on prévoit une rainure pratiquée dans le corps 5 et à l'intérieur de laquelle se loge partiellement le joint 9. Le diffuseur 1 est monté sur le corps 5, les moyens d'appui 8 assurent un contact permanent entre le joint 9 périphérique et le diffuseur 1. Le joint 9 demeure ainsi, quelle que soit la pression du fluide appliquée sur le diffuseur 1, au contact de ce dernier et du corps 5 assurant ainsi continuellement l'étanchéité de la chambre de chauffage.

La chambre de déformation 7 comprend l'élément chauffant. Elle est isolée de l'eau. Avantageusement, le diffuseur 1 est conformé de sorte que même déformé, le contact entre le joint 9 et le diffuseur 1 n'est pas rompu voire n'est pas altéré. De même, le contact entre le support 10 et la première paroi 2 du diffuseur 1 est également préservé lors de la déformation. A cet effet on prévoit un diffuseur 1 suffisamment flexible pour se déformer en épousant les parois du flasque 4 et du support 10 sans se soulever. Les formes complémentaires du corps 5 et du support 4 sont également agencées pour maintenir ce contact. Notamment, on prévoit des moyens de d'appui 8 dont les dimensions sont suffisantes pour assurer un bon maintien du diffuseur 1. En outre, le relief défini par la rainure et tourné vers la chambre de déformation contribue à maintenir le diffuseur plaqué contre les moyens d'appui 8 du corps 5 d'une part et contre le support 4 d'autre par. La chaudière est donc agencée de sorte que même sous une forte pression régnant à l'intérieur de la chambre de chauffage 6, l'isolation de la chambre de chauffage 6 et l'isolation de la chambre de déformation 7 sont préservées. Les organes électriques de l'élément chauffant sont donc isolés électriquement du fluide quelle que soit la phase d'utilisation.

Avantageusement, la chaudière comporte un support 10 dans lequel est définie la chambre de déformation 7.

Avantageusement, le support 10 incorpore les moyens d'appui 8. A titre d'alternative on prévoit que les moyens d'appui 8 sont indépendants du support 10 et coopèrent avec ce dernier.

Avantageusement, les moyens d'appui 8 sont disposés de sorte à ce que l'effort de pression exercé sur le diffuseur 1 par le fluide ne soit pas, ou ne soit que peu transmis aux moyens d'appui 8. Ainsi la majeure partie de l'effort de pression est appliquée sur la surface du diffuseur 1 destinée à se déformer. A cet effet, on peut prévoir que les moyens d'appui 8 sont disposés en périphérie de la surface du diffuseur 1 définissant la chambre de chauffage.

De manière préférée, la chaudière comporte des moyens de reprise d'effort 11 agencés pour coopérer avec les moyens d'appui 8 et avec le corps 5 de sorte à assurer une bonne transmission de l'effort de plaquage du diffuseur 1 sur le corps 5 au niveau des moyens d'appui 8.

Selon la variante de réalisation illustrée, on prévoit que le support 10 incorpore ces moyens de reprise d'effort 11. Selon une autre variante de réalisation non illustrée, le corps 5 incorpore les moyens de reprise d'effort 11. Selon encore une autre variante, les moyens de reprise d'effort 11 sont indépendants du support 10 et du corps 5 et sont agencés pour coopérer avec ces derniers.

On peut prévoir que la chambre de déformation 7 est fermée en étant rendue étanche. Dans un tel mode de réalisation tel que celui illustré, il n'est alors pas possible d'accéder au diffuseur 1 par la chambre de déformation 7. Dans un autre mode de réalisation la chambre de déformation 7 peut être partiellement ou totalement ajourée créant ainsi un passage pour accéder au diffuseur 1.

Comme sur l'exemple illustré, le diffuseur 1 peut présenter une forme de plaque. L'invention est particulièrement avantageuse pour ces types de diffuseur 1 puisque la tenue à la pression d'une plaque est relativement faible. On peut aussi prévoir que le diffuseur 1 présente sensiblement une forme de cylindre ou de portion de cylindre. La chambre de déformation 7 peut alors également présenter une forme de cylindre ou de portion de cylindre.

Dans l'exemple non limitatif illustré sur les figures, la chaudière comporte deux diffuseurs 1 dont chacune des deuxièmes parois 3 sont tournées au regard l'une de l'autre. Chaque diffuseur 1 est associé à un corps 5. Les diffuseurs 1 définissent des chambres de chauffage qui constituent un ensemble commun définissant un même volume de chauffage. Chacune des deuxièmes parois comporte au moins une résistance sérigraphiée.

Ainsi les résistances sérigraphiées sont enveloppées par le volume de chauffage. Ce dernier est disposé de part et d'autre de l'ensemble formé par les diffuseurs 1. Par conséquent, les transferts thermiques entre la chaudière et son environnement sont réduits et le rendement thermique de la chaudière est amélioré.

Dans l'exemple illustré sur les figures, la chaudière comprend un support 9 commun aux deux diffuseurs 1. Ce support 10 définit deux chambres de déformation tournées respectivement vers la deuxième paroi 3 de l'un des diffuseurs 1. Avantageusement, le support 10 comprend deux zones périphériques, disposées respectivement en périphérie de l'une des chambres de déformation. Ces zones périphériques forment des moyens d'appui 8 destinés à prendre appui sur la deuxième paroi 3 de chacun des diffuseurs 1 pour plaquer ces derniers contre le corps 5.

Les zones périphériques du support 10 sont également destinées à coopérer avec le corps 5 pour assurer un bon positionnement de ce dernier par rapport au support 10. Dans l'exemple illustré, le corps 5 se compose de deux flasques 4 destinés chacun à être associé à un diffuseur 1 pour définir le volume de chauffage. Chaque flasque 4 présente une face externe et une face interne dont le pourtour vient en appui sur la zone périphérique du support 10. Il est de préférence réalisé en plastique.

La chaudière comporte des moyens de fixation amovibles agencés pour permettre une solidarisation et une désolidarisation amovibles du flasque 4 sur le support 9.

A titre d'illustration, une chaudière selon l'exemple précédemment décrit présente les caractéristiques suivantes:
- diffuseur d'environ 60 cm² et de 1 mm d'épaisseur
- diffuseur réalisé en acier inoxydable
- surface du diffuseur au contact des moyens d'appui 11 cm²
- surface du diffuseur destiné à se déformer : 49 cm²
- surface totale du diffuseur : 60 cm²
- la chambre de déformation présente une surface comprise entre 75% et 85% de la surface du diffuseur.
- profondeur de la chambre de déformation de l'ordre de 1 mm.
- puissance de 1000 watts environ.
- épaisseur de la chaudière de 40 millimètres environ
- forme extérieure sensiblement carrée de 100 millimètres de côté environ

Une telle chaudière peut aisément permettre de porter 8 cm3 d'eau de 20°C à 95 °C en moins de 2 secondes.

Ces dimensions de diffuseur 1 et de chambre de déformation 7 permettent d'obtenir un bon débit d'eau chaude portée sous pression, en un temps très court. Ces dimensions permettent de conserver un encombrement limité tout en assurant une bonne tenue à la pression. En effet avec cette configuration de chaudière une profondeur trop importante des chambres de déformation fragilise la robustesse de l'ensemble.

Le support 10 comporte des moyens de connexion fluidiques agencés pour assurer une arrivée du liquide dans le volume de chauffage et une sortie du liquide hors du volume de chauffage. La chaudière comporte des moyens de connexion électrique agencés pour entrer au contact de moyens complémentaires de connexion électrique liés à la machine de préparation de boissons afin d'alimenter en électricité la chaudière et en particulier les éléments chauffants.

Selon un autre mode de réalisation non illustré, le corps est cylindrique, de section circulaire ou polygonale. Les diffuseurs sont logés à l'intérieur du corps. Ils sont sensiblement cylindriques et présentent une section sensiblement complémentaire de celle du corps. Ainsi, le corps fait office de manchon autour des diffuseurs. Le volume de chauffage se situe de part et d'autre des diffuseurs et enveloppe la résistance sérigraphiée.

Selon un mode de réalisation non représenté, on prévoit que la chaudière comporte une seule chambre de chauffage. Elle peut alors n'être équipée que d'un seul diffuseur plan ou courbé. Une seule chambre de déformation est alors suffisante. Typiquement, une telle chaudière peut être sensiblement similaire à une moitié de chaudière illustré sur les figures 1 et 2, la moitié étant définie par une coupe selon un plan normal au plan de la feuille et passant par la milieu de la chaudière illustrée.

Un même diffuseur peut recevoir une ou plusieurs résistances sérigraphiées

On peut également prévoir plusieurs diffuseurs agencés de sorte à former un cylindre.

Dans chacun des modes de réalisation envisagés les parois latérales du canal peuvent être portées soit par le diffuseur ou soit par le corps.

Pour un diffuseur en forme de cylindre, les moyens d'étanchéité comprennent deux joints de section sensiblement identique à celle du diffuseur et disposés le long de l'axe du cylindre de part et d'autre des chambres de chauffage.

Une chaudière selon l'invention présente des diffuseurs dont l'épaisseur et très faible. Ils utilisent ainsi une faible quantité de métal. L'invention permet ainsi de limiter le poids de la chaudière et diminue les coûts de matière et de transport induits par l'utilisation de métal. Or le coût du transport est particulièrement important dans un contexte d'éco conception puisque la chaudière est destinée à être séparée du reste de l'appareil pour être envoyée dans un centre de maintenance au cours de sa durée de vie. En outre, l'inertie thermique de la chaudière est considérablement limitée.

L'invention n'est pas limitée aux modes de réalisation décrits mais s'étend à tout mode de réalisation couvert par les revendications.

### REFERENCES

1. Diffuseur
2. Première paroi
3. Deuxième paroi
4. Flasque
5. Corps
6. Canal de circulation
7. Chambre de déformation
8. Moyen d'appui
9. Joint
10. Support
11. Moyens de reprise d'effort

## Revendications

1. Chaudière pour machine de préparation de boissons, destinée à chauffer un fluide porté sous une pression d'au moins 8 bars, comprenant
• au moins un diffuseur (1) présentant une première paroi (2) destinée à être disposée au contact du fluide à chauffer, une deuxième paroi (3) opposée à la première paroi (2) et munie d'au moins un élément chauffant,
• au moins un corps (5) définissant avec la première paroi (2) du diffuseur (1) au moins une chambre de chauffage (6).
l'élément chauffant étant un film résistif, **caractérisée en ce que** la chaudière comporte une chambre de déformation (7) et est agencée de sorte que sous l'effet de la pression régnant dans la chambre de chauffage, le diffuseur (1) se déforme élastiquement dans la chambre de déformation (7) pour absorber en partie au moins l'effort de pression, et **en ce que** la chaudière comporte des moyens d'appui (8) agencés pour prendre appui sur une partie au moins du pourtour de la deuxième paroi (2).

2. Chaudière selon la revendication précédente dans laquelle le diffuseur (1) et la chambre de déformation (7) sont conformés de sorte que sous l'effort de pression le diffuseur (1) se déforme sans interférer avec une partie de la chaudière dont la rigidité est supérieure à celle du diffuseur (1).

3. Chaudière selon la revendication précédente dans laquelle la chambre de déformation (7) contient un fluide ou un matériau compressible.

4. Chaudière selon l'une quelconque des revendications précédentes comprenant au moins deux diffuseurs (1) dont les deuxièmes parois (3) sont tournées mutuellement en regard.

5. Chaudière selon la revendication précédente dans laquelle les diffuseurs (1) enserrent les moyens d'appui (8).

6. Chaudière selon l'une quelconque des deux revendications précédentes dans laquelle la chaudière présente une symétrie par rapport à un plan médian situé entre les deux diffuseurs (1).

7. Chaudière selon l'une quelconque des deux revendications précédentes dans laquelle les moyens d'appui (8) définissent ou coopèrent avec un support (10), présentant une cavité définissant la chambre de déformation (7).

8. Chaudière selon la revendication précédente dans laquelle le support (10) et les moyens d'appui (8) forment une pièce monobloc.

9. Chaudière selon la revendication précédente dans laquelle le diffuseur (1) présente sensiblement une forme de plaque.

10. Chaudière selon l'une quelconque des revendications 1 à 8 dans laquelle au moins un diffuseur (1) présente une forme sensiblement cylindrique et dans laquelle la chambre de chauffage est située en périphérie de l'élément chauffant, l'élément chauffant étant situé en périphérie des moyens d'appui (8) ou dans laquelle l'élément chauffant est situé en périphérie de la chambre de chauffage, les moyens d'appui (8) étant situés en périphérie de l'élément chauffant de sorte à envelopper ce dernier.

11. Chaudière selon l'une quelconque des revendications 1 à 8 et 10 dans laquelle au moins un diffuseur (1) présente une forme sensiblement cylindrique.

12. Chaudière selon l'une quelconque des revendications précédentes dans laquelle le diffuseur (1) présente une surface comprise entre 2000 et 9000 mm² et plus avantageusement entre 2500 et 8000 mm².

13. Chaudière selon l'une quelconque des revendications précédentes dans laquelle le diffuseur (1) présente une épaisseur comprise entre 0.3 et 4 mm et plus avantageusement entre 0.5 et 2.5 mm et plus avantageusement encore entre 0.5 et 1.5 mm.

14. Chaudière selon l'une quelconque des revendications précédentes dans laquelle la chambre de déformation (7), dans une zone de déformation maximale du diffuseur (1), présente une profondeur comprise entre 0.3 et 1.5 mm et plus avantageusement entre 0.3 et 1 mm.

15. Machine de préparation de boissons chaudes comportant une chaudière selon l'une quelconque des revendications précédentes.

## Claims

1. A heater for a drinks preparation machine, intended to heat a fluid under a pressure of at least 8 bars, comprising:
- at least one diffuser (1) having a first wall (2) intended to be positioned in contact with the fluid to be heated, a second wall (3) opposite the first wall (2) and provided with at least one heating element,
- at least one body (5) defining with the first wall (2) of the diffuser (1) at least one heat chamber (6),
with the heating element being a resistive film, **characterized in that** the heater includes a deformation chamber (7) and is so arranged that, under the effect of the pressure inside the heat chamber, the diffuser (1) elastically deforms in the deformation chamber (7) in order to at least partially absorb the pressure stress, and **in that** the heater includes resting means (8) so arranged as to rest on at least a part of the perimeter of the second wall (2).

2. A heater according to the preceding claim, wherein the diffuser (1) and the deformation chamber (7) are so formed that, under the effect of the pressure stress, the diffuser (1) deforms without interfering with a part of the heater, the rigidity of which is greater than that of the diffuser (1).

3. A heater according to the preceding claim, wherein the deformation chamber (7) contains a fluid or compressible material.

4. A heater according to any one of the preceding claims, comprising at least two diffusers (1), the second walls (3) of which are facing each other.

5. A heater according to the preceding claim, wherein diffusers (1) enclose the resting means (8).

6. A heater according to any one of the two preceding claims, wherein the heater is symmetrical with respect to a mid plane located between the two diffusers (1).

7. A heater according to any one of the two preceding claims, wherein the resting means (8) define or cooperate with a support (10) having a cavity defining the deformation chamber (7).

8. A heater according to the preceding claim, wherein the support (10) and the resting means (8) form one piece.

9. A heater according to the preceding claim, wherein the diffuser (1) substantially has the shape of a plate.

10. A heater according to any one of claims 1 to 8, wherein at least one diffuser (1) has a substantially cylindrical shape and wherein the heat chamber is positioned on the periphery of the heating element, with the heating element being positioned on the periphery of the resting means (8) or wherein the heating element is positioned on the periphery of the heat chamber, with the resting means (8) being positioned on the periphery of the heating element so as to enclose the latter.

11. A heater according to any one of claims 1 to 8 and 10, wherein at least one diffuser (1) has a substantially cylindrical shape.

12. A heater according to any one of the preceding claims, wherein the diffuser (1) has a surface between 2,000 and 9,000mm² and more advantageously between 2,500 and 8,000mm².

13. A heater according to any one of the preceding claim, wherein the thickness of the diffuser (1) is between 0.3 and 4mm and more advantageously between 0.5 and 2.5mm and still more advantageously between 0.5 and 1.5mm.

14. A heater according to any one of the preceding claims, wherein the depth of the deformation chamber (7) in a maximum deformation area of the diffuser (1) is between 0.3 and 1.5mm and more advantageously between 0.3 and 1mm.

15. A hot drinks preparation machine including a heater according to any one of the preceding claims.

## Patentansprüche

1. Heizkessel für eine Maschine zur Zubereitung von Getränken, der zum Erhitzen eines unter einen Druck von mindestens 8 bar gebrachten Mediums bestimmt ist, umfassend
* wenigstens einen Diffusor (1), der eine erste Wand (2) aufweist, die dazu bestimmt ist, in Kontakt mit dem zu erhitzenden Medium angeordnet zu werden, eine zweite Wand (3) gegenüber der ersten Wand (2) und die mit wenigstens einem Heizelement versehen ist.
* wenigstens einen Korpus (5), der mit der ersten Wand (2) des Diffusors (1) wenigstens eine Heizkammer (6) definiert,
wobei das Heizelement eine ohmsche Folie ist, **dadurch gekennzeichnet, dass** der Heizkessel eine Verformungskammer (7) umfasst und derart angeordnet ist, dass unter der Wirkung des in der Heizkammer herrschenden Drucks der Diffusor (1) sich elastisch in der Verformungskammer (7) verformt, um zumindest zum Teil die Druckbeanspruchung zu absorbieren und dass der Heizkessel Stützmittel (8) umfasst, die angeordnet sind, um sich wenigstens auf einen Teil des Umfangs der zweiten Wand (2) aufzustützen.

2. Heizkessel gemäß dem voranstehenden Anspruch, bei dem der Diffusor (1) und die Verformungskammer (7) derart angepasst sind, dass sich der Diffusor (1) unter der Druckbeanspruchung ohne Einwirken mit einem Teil des Heizkessels, dessen Steifigkeit größer ist als die des Diffusors (1), verformt.

3. Heizkessel gemäß dem voranstehenden Anspruch, bei dem die Verformungskammer (7) ein Medium oder ein komprimierbares Material enthält.

4. Heizkessel gemäß einem der voranstehenden Ansprüche, umfassend wenigstens zwei Diffuser (1), deren zwei Wände (3) einander gegenüber gedreht sind.

5. Heizkessel gemäß dem voranstehenden Anspruch, bei dem die Diffusor die Stützmittel (8) einklemmen.

6. Heizkessel gemäß einem der zwei voranstehenden Ansprüche, bei dem der Heizkessel eine Symmetrie gegenüber einer sich zwischen den zwei Diffusoren (1) befindenden medianen Ebene aufweist.

7. Heizkessel gemäß einem der voranstehenden zwei Ansprüche, bei dem die Stützmittel (8) einen eine die Verformungskammer (7) definierende Vertiefung aufweisenden Träger (10) definieren oder damit zusammenwirken.

8. Heizkessel gemäß dem voranstehenden Anspruch, bei dem der Träger (10) und die Stützmittel (8) ein Stück aus einem Block bilden.

9. Heizkessel gemäß dem voranstehenden Anspruch, bei dem der Diffusor (1) deutlich eine Plattenform aufweist.

10. Heizkessel gemäß Anspruch 1 bis 8, bei dem wenigstens ein Diffusor (1) eine deutlich zylindrische Form aufweist und bei dem die Heizkammer sich in der Peripherie des Heizelements befindet, wobei das Heizelement sich in der Peripherie der Stützmittel (8) befindet, oder bei dem das Heizelement sich in der Peripherie der Heizkammer befindet, wobei sich die Stützmittel (8) in der Peripherie des Heizelements derart befinden, dass dieses umfasst wird.

11. Heizkessel gemäß Anspruch 1 bis 8 und 10, bei dem wenigstens ein Diffusor (1) eine deutlich zylindrische Form aufweist.

12. Heizkessel gemäß einem der voranstehenden Ansprüche, bei dem der Diffusor (1) eine zwischen 2000 und 9000 mm² und vorteilhafter zwischen 2500 und 8000 mm² inbegriffene Oberfläche aufweist.

13. Heizkessel gemäß einem der voranstehenden Ansprüche, bei dem der Diffusor (1) eine zwischen 0,3 und 4 mm und vorteilhafter zwischen 0,5 und 2,5 mm und noch vorteilhafter zwischen 0,5 und 1,5 mm inbegriffene Dicke aufweist.

14. Heizkessel gemäß einem der voranstehenden Ansprüche, bei dem die Verformungskammer (7) in einer Zone maximaler Verformung des Diffusors (1) eine zwischen 0,3 und 1,5 mm und vorteilhafter zwischen 0,3 und 1 mm inbegriffene Tiefe aufweist.

15. Maschine zur Zubereitung von heißen Getränken, umfassend einen Heizkessel gemäß einem der voranstehenden Ansprüche.
